# EUROPEAN PATENT SPECIFICATION

(11) **EP 1 186 234 B1**
(45) Date of publication and mention of the grant of the patent: **17.08.2005**
(21) Application number: 00203144.1
(22) Date of filing: 12.09.2000
(51) Int. Cl.: A01M 21/04, A01G 11/00

(54) **Apparatus and method for controlling and/or killing weeds**
Vorrichtung und Verfahren zur Unkrautbekämpfung und/oder Vernichtung
Appareil et méthode de contrôle et/ou destruction des mauvaises herbes

(43) Date of publication of application: 13.03.2002
(73) Proprietor: Scaneco Aps, 7100 Vejle (DK)
(72) Inventor: Prahl, Johannes, 5500 Middelfart (DK)
(74) Representative: Elmeros, Claus

(56) References cited:
- EP-A- 0 920 802
- WO-A-99/38378
- US-A- 5 385 106

## Description

### Field of the invention

The present invention relates to an apparatus for controlling and/or killing weeds, unwanted growth or the like, said apparatus comprising a reservoir for a liquid such as water, at least one heating element for heating of the liquid, and steam outlet means.

### Background of the invention

Controlling and/or killing weeds may be done in a number of ways. Conventionally, weeds have been mechanically controlled, for example by removing or cutting down the weeds or by using chemicals to kill them.

In order to avoid the disadvantages associated with these methods, e.g. labor intensity linked with mechanical removal, environmental pollution associated with chemical control etc., it is known to use heat in the form of for example open fire, hot water or steam to control unwanted growth.

As the use of open fire, e.g. a torch, presents an inherent risk of inducing a fire, and as the use of hot water requires a considerable amount of water and thus energy in order to achieve a satisfactory result, the use of thermal energy in the form of steam is preferable.

A number of various weed-killers using steam are known, including portable weed-killers, weed-killers for domestic use and/or for use by a single operator.

EP 920 802 A discloses such a portable weed-killing apparatus, which has a steam generator in a handle part connected by tubes to a mouthpiece in the lower part of the apparatus. The mouthpiece comprises a chamber, in which steam outlets direct steam into the chamber, thereby creating a hot zone for scorching the weeds, which extends into or is positioned below the chamber.

The steam generator in this piece of prior art comprises a water reservoir capable of containing 0,5 to 2 l of water. The water is heated by an electric heating element in the water reservoir which means that the entire amount of water must be heated to boiling temperature, before a sufficient amount of steam is produced. Therefore, the apparatus has to be filled with water, the electric power has to be connected and the operator has to wait for the water in the reservoir to be heated to a boiling point before the apparatus may be used for killing weeds.

As the water reservoir/steam generator is placed in the handle part, the steam will inevitably lose thermal energy during transport from the steam generator through the tubes to the steam outlet in the mouthpiece, thus reducing the efficiency of this known weed-killing apparatus.

Further, this known weed-killing apparatus has a couple of major disadvantages in that the water reservoir is placed in the handle part which will be positioned near the body of the operator during use, i.e. near the hip or thigh of the operator, and in that the contents of the water reservoir are heated to boiling temperature which may cause some discomfort to the operator. If the boiling water should leak or escape from the water reservoir, for example if the operator stumbles or falls, or if a filling arrangement of the reservoir has not been properly closed or the reservoir has become defective, the operator may even suffer injuries because of the hot or boiling water.

Finally, this known apparatus has the drawback that if the contents of the water reservoir have not been used, i.e. the water reservoir still contains water once the operator stops using the weed-killing apparatus, the energy used to heat the remaining quantity of water has been wasted which further reduces the energy efficiency of this known weed-killing apparatus.

WO 99/38378 A discloses a weed-killing apparatus, which has an application head at a lower part of the apparatus and a handle part at the other end of the apparatus. The application head is electrically heated and has steam outlets. A water reservoir is placed in the handle part, and by activating a pump or valve mechanism by a trigger, a small quantity of water is led from the water reservoir through tubes to the application head. Once this small amount of water reaches the hot application head, it vaporizes immediately and escapes through the steam outlets. Before activating the trigger, the operator will have to place the application head above the weed or weeds, whereby steam coming from the steam outlets will be directed towards the weed or weeds.

Besides being scorched by steam, the weed or weeds will also be damaged by the direct physical contact with the application head and by heat radiation from the application head.

This known weed-killer is not intended for continuous production of steam and application of steam to weeds, but only for selective treatment of a weed or a spot of weeds as the application head has to be positioned directly above the weed or the weeds to be treated before the trigger is activated, and as water from the reservoir is only released in small quantities each time the trigger is activated.

Further, US A 5 385 106 discloses a weed-killer comprising a reservoir for water, a heating element for heating of the water and a steam outlet means. The heating element is incorporated in the water heater, the water heater is placed in a lower part of the apparatus and the reservoir for liquid is connected to the water heater.

The water heater according to this prior art comprises a tilted container having an inlet for cold water placed at the top and an outlet for hot water or steam. The heating element is placed near the bottom of the container, i.e. above the outlet.

Further, the hot water (or steam) will escape into free air from the heater via one or two nozzles. Although this or these nozzles are directed towards the ground, an amount of the hot water (or steam) may be diverted and may not get in contact with the weeds, e.g. due to the influence of the wind etc.

### Summary of the invention

An object of the invention is to provide an improved apparatus for controlling and/or killing weeds, unwanted growth or the like.

Another object of the invention is to provide an apparatus for controlling and/or killing weeds, unwanted growth or the like, said apparatus not suffering from the drawbacks associated with prior-art.

A further object of the invention is to provide an apparatus for controlling and/or killing weeds, unwanted growth or the like, said apparatus being suitable for continuously treating weeds with steam as well as for spot-treatment, while providing the necessary amount of steam at a suitable temperature and with optimal efficiency.

These objects are met by means of an apparatus according to claim 1, wherein the apparatus comprises a steam generator in which the at least one heating element is incorporated, and wherein the steam generator is placed in a lower part of the apparatus and wherein the reservoir for liquid is connected to the steam generator.

By an apparatus according to the invention, the apparatus comprises shielding means at its lower part for applying steam to the weeds, and the steam generator is placed in a lower part of the apparatus in the vicinity of the shielding means, whereby the steam has to be transported for only a small distance. Hence, the temperature drop of the steam will be insignificant. The steam led from the steam generator is contained in a chamber, whereby the steam forms a layer or carpet of steam. This ensures that the weed or weeds are subjected to steam for a sufficiently long period of time, while the apparatus is moved along the ground. Further, the positioning of the steam generator in the vicinity of the shielding means minimizes thermal loss, both from the steam generator and/or from the connection between the boiler and the outlet means.

Further, as the heating of the liquid takes place in the lower part of the apparatus, there will be no discomfort to the user due to heated parts or heated liquid being positioned near the body of the user. Further, as the heating of the liquid takes place in a separate steam generator, only a fraction of the liquid contained in the apparatus has to be heated before the apparatus will be ready for use, and no energy will be wasted to heat a relatively large quantity of liquid which may not even be used for treating weeds.

When, as stated in claim 2, the steam generator is placed in a position in the apparatus near ground level, at a distance of 5 - 40 cm and preferably 5 - 10 cm from the ground level, an advantageous embodiment of the invention has been obtained, whereby the distance, which the steam must travel, is of an appropriate length in relation to temperature losses, while simultaneously allowing the steam to spread over an appropriate area after having left the steam outlet means.

When, as stated in claim 3, the apparatus comprises sealing means for preventing or restricting the passage of steam from the inside of the shielding means, said shielding means preferably being in the form of brushes, rubber lips or similar means, a further advantageous embodiment is achieved, whereby the containment of steam inside the shielding is enhanced, which is especially advantageous once the apparatus is moved along an uneven ground level or when the apparatus is used for treating especially sturdy, robust, voluminous or tall weeds. When sealing is in the form of brushes, the hairs of the brush may adapt flexibly to the ground below or to the weeds, while at the same time not constituting an unnecessary strong obstacle or force against the forward movement of the weed-killing apparatus.

When, as stated in claim 4, the steam outlet means is arranged to direct a flow of steam downwards, preferably in a substantially vertical direction, and when the steam outlet means comprises an outlet or a series of outlets arranged in a direction, which is essentially perpendicular to the normal direction of transport of the apparatus, an advantageous embodiment of the apparatus is provided, whereby steam from the outlet means is supplied and creates an essentially uniform layer of steam above the ground and while subjecting the weed or weeds to the steam for a sufficiently long period of time while the apparatus is moved along the ground.

Preferably, as stated in claim 5, the steam outlet means may comprise a slit-shaped outlet extending substantially transversely in relation to the traveling direction at a distance from the front and the back of the shielding means, whereby the steam will flow downwards and be divided into a stream forward and a stream backwards, both streams covering the full width of the apparatus. Thus, an essentially uniform layer of steam will be created inside the shielding, both to the front of and to the back of the steam outlet. The weed or weeds will thus be subjected to a layer of steam stretching essentially from the front of the shielding to the back of the shielding and covering essentially the whole width of the shielding. Hence an efficient and relatively fast treatment of the weeds is achieved, while the apparatus is moved along the ground.

When, as stated in claim 6, the steam outlet means is arranged to direct a flow of steam in a substantially horizontal direction, preferably to one or both sides of the apparatus, a further advantageous embodiment is provided, whereby weed or weeds present on one or both sides of the apparatus will be scorched by the steam during movement along the ground. This is especially advantageous when the apparatus is used on areas with vertical or essentially vertical surfaces, e.g. walls of buildings, curbs etc., where weed growing alongside these surfaces can not be treated by the downward stream of steam present under the shielding means of the apparatus, but only by the flow of steam in the essentially horizontal direction.

When, as stated in claim 7, means for controlling and/or regulating the supply of liquid from the reservoir to the steam generator is arranged in relation to the connection between the reservoir and the steam generator, a suitable embodiment of the invention is provided whereby it is ensured that the steam generator will always contain an appropriate quantity of liquid to be heated.

When, as stated in claim 8, the controlling and/or regulating means preferably comprises valve means controlled by the liquid level and/or the pressure in the steam generator, a suitable embodiment is provided, whereby the supply of liquid to the steam generator is controlled and/or regulated in an advantageous manner.

When, as stated in claim 9, the boiler comprises a steam generator chamber for a liquid, e.g. water, and when the steam outlet duct means leads from an upper part of the steam generator chamber to a lower part inside the shielding of the apparatus, an advantageous embodiment is achieved whereby steam from the steam generator is led to the outlet means in an optimal manner.

When, as stated in claim 10, the steam outlet duct means is preferably led through the steam generator chamber and positioned substantially vertically, the steam outlet duct means is not subjected to temperatures considerably below the steam temperature. Hence, the steam will not lose energy to the surroundings during transport to the outlet means, i.e. energy is preserved in the steam.

When, as stated in claim 11, the at least one heating element is positioned in the steam generator chamber, preferably around the steam outlet duct means, a further advantageous embodiment is provided whereby heating of the liquid is achieved in an optimal manner and whereby additional heat from the heating element may be transferred to the steam as the steam is transported through the steam outlet duct means to the outlet means.

When, as stated in claim 12, the apparatus comprises a handle part for manual operation, the handle part stretching down towards the steam generator, and when the reservoir for liquid is supported by or incorporated in this handle part, and /or when the reservoir is a structural part of the handle part, a further preferred embodiment is provided, whereby the reservoir for liquid is conveniently situated in or on the apparatus.

As stated in claim 13, the apparatus may comprise supporting and/or positioning means at its lower part, preferably in the form of one or more wheels or runners, whereby the apparatus may be moved effortlessly along the ground by the user, while simultaneously being supported in an constant and optimal level above ground, thus optimizing the weed-killing and/or controlling effect.

When, as stated in claim 14, the at least one heating element is preferably an electric heating element or a burner, for example a gas burner, the liquid will be heated by appropriate means.

When steam is produced for controlling and/or killing weeds, unwanted growth or the like, comprising the supply of a liquid from a reservoir to a steam generator placed immediately above or at a relatively short distance from the weeds, a number of advantages is achieved.

Thus, the steam has to be transported for only a small distance after having been produced in the steam generator. Hence, the temperature drop in the steam will be insignificant. As the heating of the liquid takes place immediately above or at a relatively short distance from the weeds, there will be no discomfort to the user due to heated parts or heated liquid being positioned near the body of the user. Further, as the heating of the liquid takes place in a separate steam generator, only a fraction of the liquid contained in the apparatus has to be heated, before the apparatus will be ready for use, and no energy will be wasted to heat a relatively large quantity of liquid which may not even be used.

When the supply of liquid from the reservoir to the steam generator is controlled and/or regulated, preferably in relation to the liquid level and/or the pressure in the steam generator, it is ensured that an appropriate quantity of liquid will be heated in the steam generator.

The liquid in the steam generator may preferably be heated by at least one heating element, preferably an electric heating element or a burner.

### The drawings

The invention will be described below with reference to the drawings of which
- fig. 1: shows a weed-controlling or -killing apparatus according to an embodiment of the invention seen from the side,
- fig. 2: is a sectional enlarged view through the lower part of the weedcontrolling or -killing apparatus shown in fig. 1,
- fig. 3: is a sectional view along lines III - III in fig. 2 of the lower part of the steam outlet means, and
- fig. 4: is a sectional and perspective view showing a steam generator in a slightly altered embodiment according to the invention.

### Detailed description

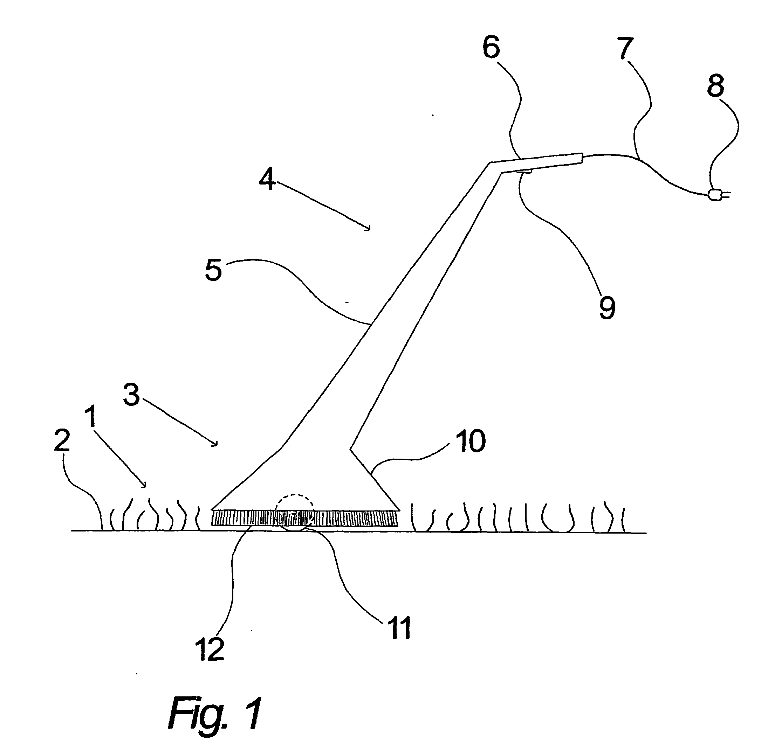

An apparatus for controlling or killing weeds 1 is shown in fig. 1 from the side. The apparatus comprises a lower part 3 and a handle part 4. The handle part 4 includes a connecting part 5 connected to the lower part 3 of the apparatus and an upper part connected to a handle 6. An electrical wire 7 with an electrical plug 8 for supplying the necessary power is connected to the handle 6. Further, the handle 6 is fitted with an electrical switch 9 for electrical power.

The lower part of the apparatus comprises a shield 10 for preventing steam from escaping. Further, the lower part comprises wheels 11 for supporting the apparatus on the ground 2. The shield 10 has sealing means at its lower edge in order to enhance the containment of the steam. These sealing means may be in the form of brushes 12, made from a material capable of withstanding the temperature of the steam, or in the form of rubber lips or sealing band, strips or the like made from appropriate materials.

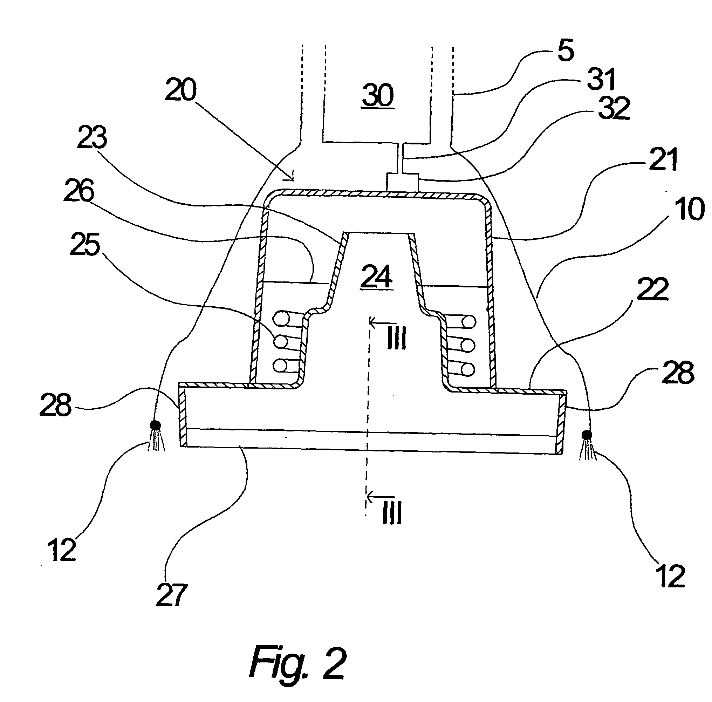

In fig. 2, a blow-up of a cross-section of the lower part of the weed-killing an/or controlling apparatus is illustrated. The cross-section is from a direction, which is substantially perpendicular to the normal direction of movement for the apparatus.

A steam generator 20 is positioned inside the shielding means 10. This steam generator has an outer shell 21, inside which an inner shell 23 with a lower part 22 is positioned. Between these two shell-parts, a steam generator cavity is defined, in which a heating element illustrated by e.g. an electric heating element 25 is placed. As illustrated, the steam generator cavity is filled with water, a water solution or another suitable liquid 26.

The inner shell 23 has an opening at the top which leads into an inner cavity 24. This inner cavity 24 is connected to a lower outlet cavity surrounded by walls of which the end walls 28 are illustrated in figure 2. This lower outlet cavity has an opening or series of openings 27 pointing downwards. The opening or openings 27 create(s) a slit-shaped outlet which extends transversely in relation to the traveling direction of the apparatus. The outlet is placed at a distance from the front and the back of the shield 10.

Above the steam generator 20, a liquid or water reservoir 30 is placed inside the handle part 4 and primarily in the connecting part 5 of the handle part as illustrated in fig. 2. The reservoir 30 is connected by means of a tube or pipe 31 to a controlling or regulating valve 32. This valve 32 is connected to the steam generator 20 and serves to control or regulate the supply of liquid, e.g. water, to the steam generator 20 as will be explained at a later point. The reservoir 20 is preferably capable of containing 0,5 to 31 of liquid, e.g. water.

Finally, it is illustrated in figure 2 that the lower edge of the shield 10 is supplied with sealing means 12 in the form of brushes or bristles. However, other forms of sealing means may be utilized, e.g. rubber lips, sealing strips, etc.

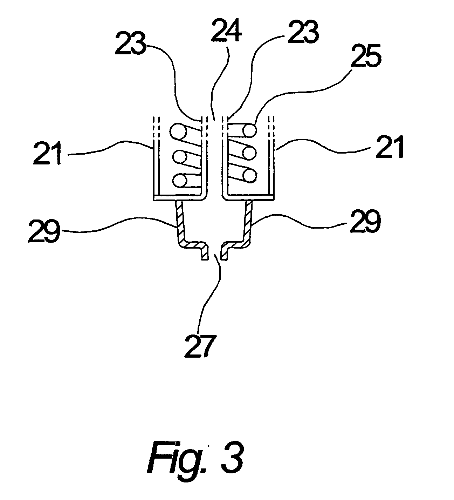

In figure 3, a part-section taken along line III - III shown in figure 2 is illustrated. This section illustrates the lower part of the steam generator 20, showing the steam generator cavity defined by the outer shell 21 and the inner shell 23, said steam generator cavity comprising the heating element 25 being positioned for heating of the liquid or water normally occupying the lower part of this cavity.

The inner cavity 24 is illustrated by the downward connection via the outlet cavity to the opening or series of openings 27. The opening or series of openings 27 is defined by sidewalls 29 connected to the end walls 28 shown in figure 2. As illustrated, the opening or series of openings 27 constitutes a through- or channel-like opening or an opening, which may be defined as a slit-shaped opening. This outlet opening extends transversely or substantially transversely in relation to the traveling direction and is located at a distance from the front and the back of the shield 10.

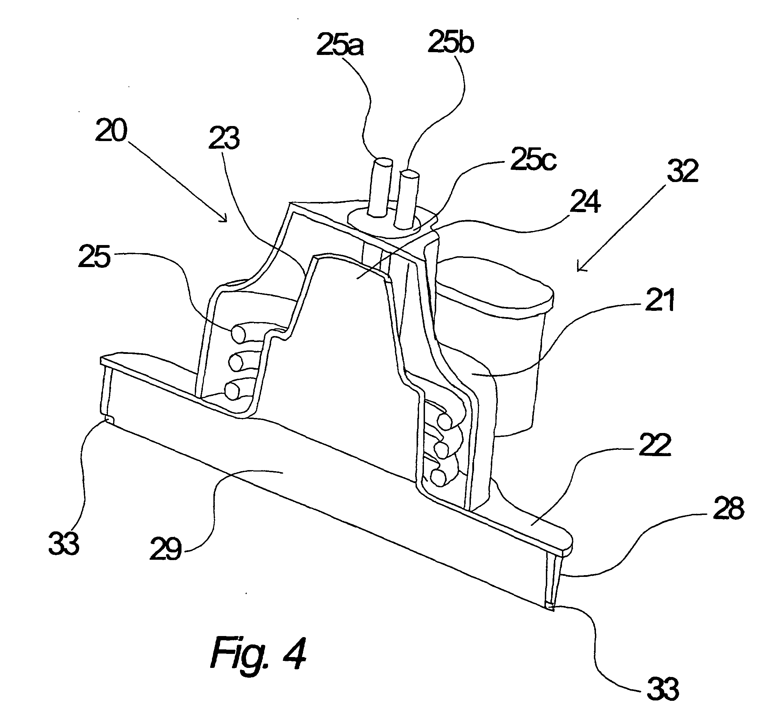

Fig. 4 illustrates an enlarged perspective view of a cross-section corresponding to the section shown in fig. 2, but shows a slightly different steam generator 20 with a valve arrangement 32. The outer shell 21 and the inner shell 23 define a steam generator cavity in which an electric heating element 25 similarly to that shown in fig. 2 is placed. The heating element 25 has connecting parts 25a and 25b, which are located in a plug 25c at the top of the outer shell 21. The connecting parts 25a and 25b and the corresponding plug 25c may be located in other parts of the outer shell 21, for example in a side part of the outer shell.

The inner shell 23 is connected to the lower part 22. This lower part 22 is connected to the end walls 28 and the sidewalls 29, hereby defining the lower outlet cavity connected to the inner cavity 24 of the inner shell 23.

The end walls 28 have openings 33, which serve, as will be described later, to direct steam in lateral directions. One or more of these openings 33 may be placed at each end wall 28, and the openings 33 may be placed in other positions than those illustrated in fig. 4, e.g. at a higher position on the wall 28 and/or in an angled position, directing the steam slightly forward or backwards and/or downwards or upwards.

Furthermore, the embodiment shown in fig. 4 differs from the embodiment shown in fig. 2 in that the upper parts of the outer shell 21 are partly inclined at the top resulting in a relatively small volume in the steam generator cavity over the liquid. This embodiment has the advantage that the steam generator has relatively small outer dimensions at the top, but in cases of steam generators with a relatively large heating effect, the embodiment shown in fig. 2 may be advantageous because of the relatively large volume available for steam.

The valve arrangement 32 is connected to the water reservoir 30 (not shown in fig. 4), and has a connection (not shown) to the steam generator cavity, said connection preferably leading from a lower part of the valve arrangement 32 to the steam generator cavity through the outer shell 21.

The function of the illustrated apparatus for controlling or killing weeds will now be explained in detail.

Water or any other suitable liquid is filled into the reservoir 30, which may or may not be supplied with closing means. Supposing that the steam generator cavity between the inner 23 and the outer shell 21 is empty, liquid will pass via the tube or pipe 31 and the valve arrangement 31 into the steam generator cavity. Once a sufficient amount of liquid has passed into the steam generator cavity, the valve arrangement will close the flow of liquid.

The apparatus is plugged into the electric mains supply by means of the cable 7 and a plug 8. Once the switch 9 is turned on, the electric heating element 25 will heat the liquid to its boiling point. Steam will pass downwards through the inner cavity 24, which serves as steam outlet duct means. From the inner cavity 24 the steam will leave through the opening or series of openings 27 causing the steam to move downwards. When in use, the opening or series of openings 27 will be immediately above the ground, and the steam will be directed to both sides of the slit-shaped opening or series of openings 27 and will eventually fill the shielding means 10 with a layer or carpet of steam having a temperature sufficiently high to scorch the weeds, e.g. approximately 80°C or more.

In addition, a number of openings may be provided at the end of the lower part of the steam generator, i.e. at the outlet means, for example openings 33 in the end walls 28 as shown in fig. 4, whereby steam will be directed in a substantially horizontal direction. Weeds growing on the sides of the path of the apparatus will thus also be treated, which is particularly advantageous when the apparatus is used at places with non-horizontal surfaces, e.g. walls, curbstones etc. This embodiment, of course, will also have suitable openings in the shielding means and/or the sealing means 12 for the side steam.

As the apparatus is moved along the ground, weeds will be subjected to the steam, and since the shielding means covers a predefined horizontal distance, and the apparatus is moved with a suitable velocity above ground by the operator, the weeds will be subjected to the steam for an appropriate period of time, preferably 1 to 2 seconds, which will ensure that the weeds will be scorched, e.g. that a sufficient part of the cells of the weed plants will be destroyed whereby the weeds will dry out and wither within a few days after treatment.

When an amount of liquid has vaporized, causing the liquid level 26 to drop, the valve arrangement 32 will open and allow a certain amount of water to pass from the reservoir 30 to the steam generator causing the liquid level to rise again to normal or maximum level.

The level of liquid will normally be higher than the highest part of the heating element 25, thereby avoiding harmful temperatures in any part of the heating element 25. However, an upper level is defined by the entrance to the inner cavity 24 and may in fact be even lower due to a certain expected tilt, whereby the liquid will be able to enter the inner cavity. Thus, an upper level will in reality be defined in consideration of an expected maximum tilt of the apparatus.

The valve arrangement may be configured in a number of ways. However, the valve arrangement will generally serve to maintain the liquid level between the lower and the upper levels, or even to maintain the level at a constant or at a near-constant. The valve arrangement may for example be an on-off-valve or a valve regulating a flow of liquid from the reservoir. The valve arrangement may e.g. be controlled in relation to the liquid level in the steam generator cavity, in relation to the liquid pressure in the steam generator cavity or in relation to a sensor positioned at a reference level in the steam generator. In a preferred form, the valve arrangement may comprise a float arrangement which controls a valve, e.g. a needle valve, which, in turn, controls or regulates the supply of liquid.

Once the liquid in the reservoir 30 has been used, the steam generator 20 will eventually run dry. In order to avoid overheating of the steam generator, e.g. the heating element 25, and thereby damage it, the steam generator 20 has an arrangement to switch off the supply of electricity to the heating element 25 or other means to prevent overheating. For example, a thermostat may be provided which switches the electricity off when abnormally high temperatures have been reached. Such a thermostat may e.g. be thermally connected with the plug 25c shown in fig. 4. Another example of preventing overheating may be to configure the heating element as a self-regulating element, e.g. a heating element which attains a higher resistance when temperature rises, thereby reducing the effect of the heating element.

The apparatus may be provided with an automatic safety device, for example in the form of a dead man's handle, in order to prevent accidents and injury to the operator, for example when the apparatus is placed on the ground or if the operator stumbles and falls causing the power supply to the apparatus to be cut off.

Further, in addition to or as an alternative to the dead man's handle, the apparatus may be provided with an arrangement to switch off the heating power if the apparatus is tilted beyond a predefined angle in order to prevent accidents and injury to the operator, for example when the apparatus is laid down on the ground or if the operator stumbles and falls. Such an arrangement may comprise a tilt-sensitive switch, e.g. a mercury switch.

The reservoir 30 may be configured as an independent part placed in or on the handle part or as an integrated part of the steam generator 20. It may also serve to strengthen the handle part, or it may even be an integrated part of the handle part, e.g. some of the walls of the reservoir may serve as outer walls of the handle part 4, e.g. the connecting part 5, whereby the weight and volume of the apparatus is reduced.

As shown on figure 1, the apparatus is supported by wheels 11, for example two wheels with one placed on each side of the steam generator 20. One wheel may suffice, or more than two, for example three or four, may be used. The wheel or wheels is/are preferably placed inside the shielding means 10 as illustrated in fig. 1, as this will allow the apparatus to be used very closely to non-vertical surfaces, e.g. walls, curbstones etc. Instead of wheels, other means of support of the apparatus may be used, for example one or more runners, which may be provided in various configurations.

Generally, the support means serves to maintain the steam generator 20, and in particular the outlet openings 27, at a predefined level above ground and to facilitate the transport of the apparatus along the ground. The steam generator, e.g. the bottom part of the steam generator cavity, is preferably placed at a distance of 5 - 40 cm above ground and preferably at a distance of 5 - 10 cm above ground which will provide an optimal spread of steam inside the shielding means 10.

The apparatus may optionally be configured in such a manner that it is possible for the user to change the effective width of the lower part of the apparatus, e.g. the width of the steam delivering parts, making the apparatus more flexible. Thus, it will be possible to use the apparatus for killing weeds in places where an apparatus with a normal width can not be used, for example between rows of plants, vegetables etc.

To achieve this, the shielding means and at least part of the steam outlet means of the steam generator may be constructed as exchangeable parts available in a number of different widths, for example in normal width and a smaller width for use between e.g. rows of plants. Other sizes may also be available, even larger than the normal size.

The exchangeable parts, comprising the shielding means and at least part of the steam outlet means, may be designed as a snap-on-unit incorporating quick-connecting means for attaching the unit to the rest of the apparatus. The exchangeable unit may also comprise other parts of the apparatus, for example supporting means such as wheels, and may even comprise the steam generator or part of the steam generator.

The heating element 25 has been shown in the form of an electric heating element supplied with power from the mains supply e.g. from a 230 or 110 V AC supply, whereby an effect of e.g. 2,2 - 2,4 kW may be achieved. Alternatively, the electric heating element may be supplied with power from a rechargeable energy source, for example a battery, placed in the apparatus.

Instead of an electric heating element, a burner such as a gas burner may be applied to a steam generator according to the invention, thereby maintaining the essential features of the invention. One or more burners may be provided in a number of ways apparent to a person skilled in the art in order to heat the liquid in the steam generator cavity. If a gas burner is used, the gas may be supplied from one or more gas containers, e.g. gas cans placed in or on the handle part 4, e.g. the connecting part 5, of the apparatus. The gas container or containers may be refillable or may be replaceable, e.g. disposable containers.

By the description above, it has been specified that the apparatus is intended for use on the ground. It is obvious that ground is defined as any surface on which weeds may grow, e.g. dirt, pavement, gravel surfacing, brick surfacing, asphalt road, concrete etc.

## Claims

1. Apparatus for controlling and/or killing weeds, unwanted growth or the like, said apparatus comprising
- a steam generator (20) comprising at least one heating element (25) for heating of a liquid such as water,
- a reservoir (30) for said liquid, said reservoir (30) for liquid being connected to the steam generator, and
- steam outlet means arranged to direct a flow of steam downwards
**characterized in that** the apparatus comprises shielding means (10) at its lower part (3) for applying steam to the weeds and **in that** the steam generator (20) is placed in a lower part (3) of the apparatus in the vicinity of the shielding means (10).

2. Apparatus according to claim 1 **characterized in that** the steam generator (20) is placed in a position in the apparatus near a ground level at a distance of 5 - 40 cm and preferably at 5 - 10 cm from ground level.

3. Apparatus according to claim 1 or 2 **characterized in that** the apparatus comprises sealing means for preventing or restricting the passage of steam from the inside of the shielding means, preferably in the form of brushes (12), rubber lips or similar means.

4. Apparatus according to one or more of claims 1 - 3 **characterized in that** said steam outlet means, which is arranged to direct a flow of steam downwards, preferably in a substantially vertical direction, comprises an outlet or a series of outlets (27) arranged in a direction which is essentially perpendicular to the normal direction of transport for the apparatus.

5. Apparatus according to one or more of claims 1 - 4 **characterized in that** the steam outlet means comprises a slit-shaped outlet (27) extending substantially transversely in relation to the traveling direction at a distance from the front and the back of the shielding means.

6. Apparatus according to one or more of claims 1 - 5 **characterized in that** the steam outlet means is arranged to direct a flow of steam in a substantially horizontal direction, preferably on one or both sides of the apparatus.

7. Apparatus according to one or more of claims 1 - 6 **characterized in that** means for controlling and/or regulating the supply of liquid from the reservoir (30) to the steam generator (20) is arranged in relation to the connection (31) between the reservoir and the boiler.

8. Apparatus according to claim 7 **characterized in that** the controlling and/or regulating means comprises valve means controlled by the liquid level and/or the pressure in the steam generator.

9. Apparatus according to one or more of claims 1 - 8 **characterized in that** the steam generator (20) comprises a steam generator chamber for a liquid (26), e.g. water, and **in that** steam outlet duct means leads from an upper part of the steam generator chamber to a lower part inside the shielding (10) of the apparatus.

10. Apparatus according to claim 9 **characterized in that** the steam outlet duct means is led through the steam generator chamber and preferably positioned substantially vertically.

11. Apparatus according to claim 9 or 10 **characterized in that** the at least one heating element (25) is positioned in the steam generator chamber, preferably around the steam outlet duct means.

12. Apparatus according to one or more of claims 1 - 11 **characterized in that** the apparatus comprises a handle part (4) for manual operation, the handle part stretching down towards the steam generator (20), and **in that** the reservoir (30) for liquid is supported by or incorporated in this handle part, and /or **in that** the reservoir (30) is a structural part of the handle part (4).

13. Apparatus according to one or more of claims 1 - 12 **characterized in that** the apparatus comprises supporting and/or positioning means at its lower part (3), preferably in the form of one or more wheels (11) or runners.

14. Apparatus according to one or more of claims 1 - 13 **characterized in that** the at least one heating element is an electric heating element (25) or a burner, for example a gas burner.

## Patentansprüche

1. Vorrichtung zum Kontrollieren und/oder Vernichten von Unkraut, unerwünschtem Wuchs oder ähnlichem, wobei die Vorrichtung umfasst:
- einen Dampfgenerator (20), umfassend zumindest ein Heizelement (25) zum Erhitzen einer Flüssigkeit wie z.B. Wasser,
- einen Vorratsbehälter (30) für die Flüssigkeit, wobei dieser Vorratsbehälter (30) für die Flüssigkeit mit dem Dampfgenerator verbunden ist, und
- Dampfauslassmittel, die so angeordnet sind, dass sie einen Dampfstrom nach unten richten, **dadurch gekennzeichnet, dass** die Vorrichtung an ihrem unteren Abschnitt (3) Abschitmmittel (10) zum Aufbringen von Dampf auf das Unkraut umfasst und dass der Dampfgenerator (20) in einem unteren Abschnitt (3) der Vorrichtung in der Nähe der Abschirmmittel (10) angeordnet ist.

2. Vorrichtung nach Anspruch 1, **dadurch gekennzeichnet, dass** der Dampfgenerator (20) in der Vorrichtung in einer Position nahe Bodenhöhe in einem Abstand von 5 - 40 cm, vorzugsweise 5 - 10 cm über Bodenhöhe angebracht ist.

3. Vorrichtung nach Anspruch 1 oder 2, **dadurch gekennzeichnet, dass** die Vorrichtung Dichtungsmittel zum Verhindern oder Begrenzen des Durchtritts von Dampf von der Innenseite der Abschirmmittel umfasst, vorzugsweise in Form von Bürsten (12) Gummilippen oder ähnlichen Mitteln.

4. Vorrichtung nach einem oder mehreren der Ansprüche 1 bis 3, **dadurch gekennzeichnet, dass** das Dampfauslassmittel, das so angeordnet ist, dass es einen Dampfstrom nach unten richtet, vorzugsweise in einer im wesentlichen vertikalen Richtung, einen Auslass oder eine Reihe von Auslässen (27) umfasst, die in einer Richtung angeordnet sind, die im wesentlichen senkrecht zur normalen Transportrichtung für die Vorrichtung ist.

5. Vorrichtung nach einem oder mehreren der Ansprüche 1 bis 4, **dadurch gekennzeichnet, dass** das Dampfauslassmittel einen schlitzförmigen Auslass (27) umfasst, der sich im wesentlichen schräg im Verhältnis zur Bewegungsrichtung in einem Abstand von der Vorder- und der Rückseite der Abschirmmittel erstreckt.

6. Vorrichtung nach einem oder mehreren der Ansprüche 1 bis 5, **dadurch gekennzeichnet, dass** das Dampfauslassmittel so angeordnet ist, dass es einen Dampfstrom in einer im wesentlichen horizontalen Richtung, vorzugsweise auf einer oder beiden Seite(n) der Vorrichtung, richtet.

7. Vorrichtung nach einem oder mehreren der Ansprüche 1 bis 6, **dadurch gekennzeichnet, dass** ein Mittel zum Steuern und/oder Regulieren der Flüssigkeitszufuhr von dem Vorratsbehälter (30) zum Dampfgenerator (20) in Relation zu der Verbindung (31) zwischen dem Vorratsbehälter und dem Dampfgenerator angeordnet ist.

8. Vorrichtung nach Anspruch 7, **dadurch gekennzeichnet, dass** das Steuer- und/oder Regulierungsmittel Ventilmittel umfasst, die vom Flüssigkeitspegel und/oder dem Druck in dem Dampfgenerator gesteuert werden.

9. Vorrichtung nach einem oder mehreren der Ansprüche 1 bis 8, **dadurch gekennzeichnet, dass** der Dampfgenerator (20) eine Dampfgeneratorkammer für eine Flüssigkeit (26), z.B. Wasser, umfasst, und dass das Dampfauslassführungsmittel von einem oberen Abschnitt der Dampfgeneratorkammer zu einem unteren Abschnitt innerhalb der Abschirmung (10) der Vorrichtung führt.

10. Vorrichtung nach Anspruch 9, **dadurch gekennzeichnet, dass** das Dampfauslassführungsmittel durch die Dampfgeneratorkammer geführt und vorzugsweise im wesentlichen vertikal angeordnet ist.

11. Vorrichtuag nach Anspruch 9 oder 10, **dadurch gekennzeichnet, dass** das mindestens eine Heizelement (25) in der Dampfgeneratorkammer, vorzugsweise um die Dampfauslassführungsmittel herum, angeordnet ist.

12. Vorrichtung nach einem oder mehreren der Ansprüche 1 bis 11, **dadurch gekennzeichnet, dass** die Vorrichtung einen Griffabschnitt (4) für manuelle Bedienung umfasst, wobei sich der Griffabschnitt nach unten zum Dampfgenerator (20) hin erstreckt, und dass der Vorratsbehälter (30) für Flüssigkeit von diesem Griffabschnitt gestützt oder in diesen inkorporiert ist und/oder dass der Vorratsbehälter (30) ein Bauteil des Griffabschnittes (4) ist.

13. Vorrichtung nach einem oder mehreren der Ansprüche 1 bis 12, **dadurch gekennzeichnet, dass** die Vorrichtung an ihrem unteren Abschnitt (3) Stütz- und/oder Positioniermittel, vorzugsweise in Form eines oder mehrerer Räder (11) oder Rollen umfasst.

14. Vorrichtung nach einem oder mehreren der Ansprüche 1 bis 13, **dadurch gekennzeichnet, dass** das mindestens eine Heizelement ein elektrisches Heizelement (25) oder ein Brenner, z.B. ein Gasbrenner, ist.

## Revendications

1. Appareil de contrôle et/ou destruction des mauvaises herbes, des plantes indésirables ou des espèces similaires, ledit appareil comprenant :
- un générateur de vapeur (20) comprenant au moins un élément chauffant (25) pour le chauffage d'un liquide tel que de l'eau ;
- un réservoir (30) pour ledit liquide, ledit réservoir (30) pour le liquide étant raccordé au générateur de vapeur ; et
- des moyens de décharge de vapeur agencés pour diriger un flux de vapeur vers le bas ;
**caractérisé en ce que** l'appareil comprend des moyens de protection (10) dans sa partie inférieure (3) pour appliquer la vapeur sur les mauvaises herbes et **en ce que** le générateur de vapeur (20) est installé dans une partie inférieure (3) de l'appareil à proximité des moyens de protection (10).

2. Appareil selon la revendication 1, **caractérisé en ce que** le générateur de vapeur (20) est installé dans une position dans l'appareil proche d'un niveau du sol à une distance de 5 à 40 cm et de préférence de 5 à 10 cm à partir du niveau du sol.

3. Appareil selon l'une quelconque des revendications 1 ou 2, **caractérisé en ce que** l'appareil comprend des moyens d'obturation pour empêcher ou limiter le passage de la vapeur à partir de l'intérieur des moyens de protection, de préférence dans la forme de brosses (12), de lèvres de caoutchouc ou de moyens similaires.

4. Appareil selon l'une ou plusieurs des revendications 1 à 3, **caractérisé en ce que** lesdits moyens de décharge de vapeur, qui sont agencés pour diriger un flux de vapeur vers le bas, de préférence dans une direction essentiellement verticale, comprennent un orifice de sortie ou une série d'orifices de sortie (27) agencés dans une direction qui est essentiellement perpendiculaire à la direction normale de transport de l'appareil.

5. Appareil selon l'une ou plusieurs des revendications 1 à 4, **caractérisé en ce que** les moyens de décharge de vapeur comprennent un orifice de sortie en forme de fente (27) qui s'étend essentiellement transversalement par rapport à la direction de déplacement à une distance de l'avant et de l'arrière des moyens de protection.

6. Appareil selon l'une ou plusieurs des revendications 1 à 5, **caractérisé en ce que** les moyens de décharge de vapeur sont agencés de manière à diriger un flux de vapeur dans une direction essentiellement horizontale, de préférence sur un ou les deux côtés de l'appareil.

7. Appareil selon l'une ou plusieurs des revendications 1 à 6, **caractérisé en ce que** des moyens de contrôle et/ou de régulation de l'acheminement de liquide à partir du réservoir (30) jusqu'au générateur de vapeur (20) sont agencés par rapport au raccordement (31) entre le réservoir et le générateur.

8. Appareil selon la revendication 7, **caractérisé en ce que** les moyens de contrôle et/ou de régulation comprennent des moyens de soupape contrôlés par le niveau de liquide et/ou la pression dans le générateur de vapeur.

9. Appareil selon l'une ou plusieurs des revendications 1 à 8, **caractérisé en ce que** le générateur de vapeur (20) comprend un compartiment de générateur de vapeur pour un liquide (26), par exemple de l'eau, et **en ce que** les moyens de canalisation de sortie de vapeur conduisent depuis une partie supérieure du compartiment de générateur de vapeur jusqu'à une partie inférieure à l'intérieur de la protection (10) de l'appareil.

10. Appareil selon la revendication 9, **caractérisé en ce que** les moyens de canalisation de sortie de vapeur sont conduits à travers le compartiment de générateur de vapeur et de préférence installés essentiellement verticalement.

11. Appareil selon l'une quelconque des revendications 9 ou 10, **caractérisé en ce que** l'élément chauffant (25), au moins au nombre d'un, est installé dans le compartiment de générateur de vapeur, de préférence autour des moyens de canalisation de sortie de vapeur.

12. Appareil selon l'une ou plusieurs des revendications 1 à 11, **caractérisé en ce que** l'appareil comprend une partie de manche (4) pour l'utilisation manuelle, la partie de manche s'étendant vers le bas en direction du générateur de vapeur (20), et **en ce que** le réservoir (30) de liquide est soutenu par cette partie de manche ou intégré dans celle-ci, et/ou **en ce que** le réservoir (30) est une partie structurelle de la partie de manche (4).

13. Appareil selon l'une ou plusieurs des revendications 1 à 12, **caractérisé en ce que** l'appareil comprend des moyens de support et/ou de positionnement dans sa partie inférieure (3), de préférence dans la forme d'une ou de plusieurs roues (11) ou glissières.

14. Appareil selon l'une ou plusieurs des revendications 1 à 13, **caractérisé en ce que** l'élément chauffant, au moins au nombre d'un, est un élément chauffant électrique (25) ou un brûleur, par exemple un brûleur au gaz.
